Europäisches Patentamt

European Patent Office

Office européen des brevets

(11) Veröffentlichungsnummer: **0 421 265 A1**

## (12) EUROPÄISCHE PATENTANMELDUNG

(21) Anmeldenummer: 90118526.4

(22) Anmeldetag: 27.09.90

(51) Int. Cl.5: **C02F 1/52, B01F 5/02**

(30) Priorität: 02.10.89 DE 3932872

(43) Veröffentlichungstag der Anmeldung:
**10.04.91 Patentblatt 91/15**

(84) Benannte Vertragsstaaten:
**BE CH DE FR GB IT LI NL SE**

(71) Anmelder: **RITTERSHAUS & BLECHER GMBH**
**Otto-Hahn-Strasse 42**
**W-5600 Wuppertal 21(DE)**

(72) Erfinder: **Oelbermann, Max**
**Wilhelm-Engels-Strasse 1**
**W-5630 Remscheid(DE)**

(74) Vertreter: **Peerbooms, Rudolf, Dipl.-Phys.**
**Postfach 200 208 Dickmannstrasse 45c**
**W-5600 Wuppertal 2(DE)**

(54) Verfahren und Vorrichtung zum Einmischen einer Flockungsmittellösung in eine zu filtrierende Trübe.

(57) Zur besseren Einmischung einer Flockungsmittellösung in eine zu filtrierende, unter Filtrationsdruck stehende Trübe, sind ein Verfahren und eine Vorrichtung beschrieben, bei denen der Trübestrom (5) in zwei oder mehrere Teilströme (6, 7) aufgeteilt und die Teilströme nachfolgend zur Durchmischung mit dem Flockungsmittel (9) als Prallströme gegeneinander gerichtet werden.

Fig.1

EP 0 421 265 A1

# VERFAHREN UND VORRICHTUNG ZUM EINMISCHEN EINER FLOCKUNGSMITTELLÖSUNG IN EINE ZU FILTRIERENDE TRÜBE

Die Erfindung betrifft ein Verfahren zum Einmischen einer Flockungsmittellösung in eine zu filtrierende, unter Filtrationsdruck stehende Trübe, insbesondere bei Abwässer-Kläranlagen, sowie eine Vorrichtung zur Durchführung des Verfahrens.

Es ist bekannt, zu filtrierenden Trüben, die noch mehr oder weniger große Mengen an organischen Substanzen enthalten, geeignete Flockungschemikalien, wie Aluminiumsulfat, Aluminat, Eisen-III-Chlorid oder Polyelektrolyte zuzusetzen, wodurch die Hydroxide von Aluminium und Eisen in voluminöser Form ausfallen, die einen Teil der organischen Substanz adsorbieren, die somit bei einer nachfolgenden Filtration von der flüssigen Phase getrennt werden können. Der Verbrauch an Flockungschemikalien ist geringer, wenn die Trübe nach Zusatz der Chemikalien ohne Dazwischenschaltung von Klärbecken oder Absetzbecken sofort in ein Filter geleitet wird. Der Zusatz der Flockungschemikalie erfolgt hierbei in flüssiger Form. Zur Erzielung einer ausreichenden Durchmischung ist es bekannt, die mit Flockungsmittel versetzte Trübe in eine Mischkammer mit Rührwerk einzuleiten, von wo aus die durchmischte Trübe dann zu den Druckkammern des Filters geführt wird.

Ein ähnliches Aufbereitungsverfahren, bei dem Klärschlamm ungelöschter Kalk bzw. Kalkmilch als Konditionierungsmittel zugesetzt wird, ist in der DE-OS 27 50 028 beschrieben, wobei ebenfalls ein Rührwerk für die Durchmischung vorgesehen ist. Der Einsatz solcher Rührwerke bereitet in der Praxis aber vielfach erhebliche Schwierigkeiten, da gerade bei Abwässeranlagen die Trübe Faserstoffe noch mitführen kann, die relativ rasch eine Zusetzung des Rührwerkes wie auch überhaupt an Einengungsstellen der Trübezuleitung bewirken. Bei der vorgenannten bekannten Anordnung ist zwar eine das Rührwerk umgehende, von der Pumpe zum Filter führende Trübeleitung noch vorgesehen, die dort aber nur dann verwendet wird, wenn keine Konditionierungsmittel dem Schlamm zugesetzt werden müssen.

Der Erfindung liegt die Aufgabe zugrunde, ein Verfahren zum Einmischen einer Flockungsmittellösung in eine zu filtrierende, unter Filtrationsdruck stehende Trübe anzugeben, bei dem stromab der Pumpe ein solch weiter Querschnitt für die Trübeleitung vorgesehen werden kann, daß die Gefahr eines Verstopfens oder Zusetzens behoben ist, andererseits aber noch eine sehr effektive Durchmischung gewährleistet ist.

Zur Lösung dieser Aufgabe ist erfindungsgemäß vorgesehen, daß der auf Filtrationsdruck gebrachte Trübestrom in zwei oder mehrere Teilströme aufgeteilt und die Teilströme nachfolgend als Prallströme gegeneinander gerichtet werden, daß das Flockungsmittel in die Prallzone der Teilströme eingeführt wird und daß die Zugabemenge an Flockungsmittellösung kontinuierlich abhängig von der Trübe-Durchflußmenge geregelt wird.

Das Verfahren nach der Erfindung erbringt den großen Vorteil, daß die Durchmischung durch die Strömungsenergie des Trübestromes bewirkt wird, so daß also eine Energiezufuhr über ein Rührwerk oder dgl. entfällt und mit weiten, strömungsgünstigen Querschnitten gearbeitet werden kann. Da die Zugabemenge von Flockungsmittellösung kontinuierlich abhängig von der Trübe-Durchflußmenge geregelt wird, sind zugleich die großen Mengen- und Druckschwankungen während jeder Filtrationscharge berücksichtigt. Während zu Beginn eines Filtrationsprozesses die Flüssigkeit verhältnismäßig rasch durch die Filtertücher hindurchtritt, nimmt die Durchlässigkeit der Filtertücher mit zunehmender Feststoffanlagerung ab. Im allgemeinen sinkt die Durchflußmenge der Trübe während eines Filtrationsprozesses auf ein Zehntel, wonach dann der Filterkuchen ausgeworfen und mit einer neuen Filtercharge begonnen werden kann. Bei großen Durchflußmengen und entsprechend großer Menge an Flockungsmittel ergibt sich in der Prallzone eine starke Durchwirbelungsbewegung, die auch für große Mengen eine befriedigende Durchmischung sicherstellt. Bei abnehmender Durchflußmenge nimmt die Strömungsgeschwindigkeit innerhalb der Prallzone zwar auch ab, aber es bleibt unter dem sich dann erhöhenden Filtrationsdruck noch eine so starke Durchdringung der Teilströme innerhalb der Prallzone, daß auch dann noch eine einwandfreie Durchmischung gewährleistet bleibt.

Der Erfindung zufolge kann die Flockungsmittellösung erst im Bereich der Prallzone in die Trübe-Teilströme eingeleitet werden. Alternativ ist aber auch möglich, die Flockungsmittellösung bereits vor der Prallzone jeweils entweder in den noch ungeteilten Trübestrom oder vorzugsweise in die Teilströme einzuleiten. Bevorzugt wird ein Teil der Flockungsmittellösung in die Trübeteilströme und ein weiterer Teil erst in die Prallzone eingeleitet, wobei die Aufteilung des Flockungsmittels auf die beiden Zugabestellen zweckmäßigerweise mittels eines Ventiles einstellbar ist.

Zur Durchführung des Verfahrens nach der Erfindung ist eine Vorrichtung vorgesehen, die dadurch gekennzeichnet ist, daß die Trübeleitung stromab der Filtrationspumpe in mehrere Teilleitungen aufgeteilt ist, welche radial - oder mit einer radialen Komponente - gegeneinander gerichtet in eine etwa zylindrische Mischkammer münden, in die an der dem Mischkammerausgang gegenüberliegenden Seite axial eine Zuleitung für die Flockungsmittellösung einmündet. Zweckmäßigerweise ist die Achse der zylindrischen Mischkammer vertikal gerichtet und sind die Trübezuleitungen schräg aufwärts gegen die oben angeordnete Flockungsmittelzuleitung gerichtet.

Die Erfindung wird im folgenden anhand der Zeichnung näher erläutert, in der zeigen:

Fig. 1 eine schematische Darstellung einer Trübe-Konditionieranlage mit nachfolgendem Filter und

Fig. 2 in einem Vertikalschnitt und in vergrößerter Darstellung die Mischkammer der Konditionieranlage nach Fig. 1.

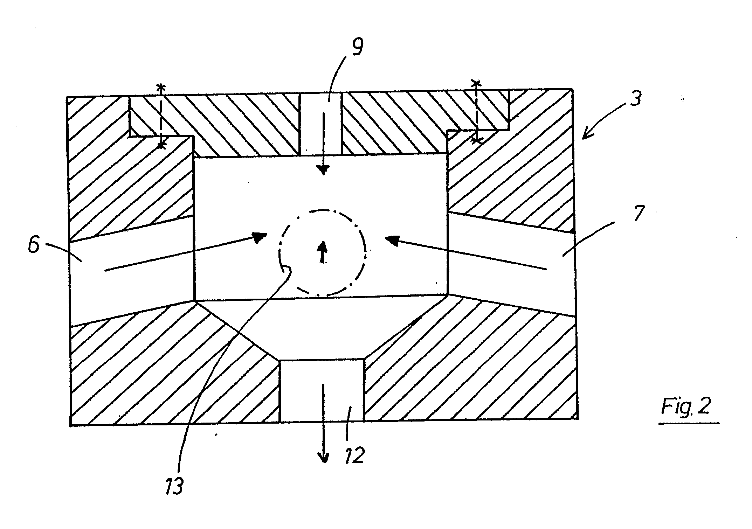

Die zu filtrierende Trübe wird von einem Trübevorratsbehälter 1 aus mittels einer Pumpe 2 über eine Mischkammer 3 einem Filter, beispielsweise einer üblichen Plattenfilterpresse 4, zugeführt. Stromab der Pumpe 2 ist die Trübezuleitung 5 in zwei gleiche Teilstromleitungen 6, 7 aufgeteilt, die radial aufeinandergerichtet in die im wesentlichen zylindrische Kammer 3 einmünden und in der Prallzone 8 aufeinanderprallen. Die im wesentlichen zylindrische Mischkammer 3 ist mit ihrer Achse vertikal gerichtet, und von oben mündet eine Zuleitung 9 für Flockungsmittellösung ein, die auf die Prallzone 8 gerichtet ist. Das Flockungsmittel, bei dem es sich insbesondere um Polyelektrolyte gemäß DE-PS 1 300 507 handelt, wird von einem Vorratsbehälter 10 mittels einer Pumpe 11 gefördert. Wie aus der vergrößerten Darstellung nach Fig. 2 ersichtlich ist, sind die Trübeteilzuleitungen 6, 7 leicht schräg nach oben gerichtet und somit mit einer gewissen Komponente auch der durch die Zuleitung 9 von oben zufließenden Flockungsmittellösung entgegengerichtet, was die Durchwirbelung noch verbessert. Über den unteren Ausgang 12 der nach unten hin sich trichterförmig einengenden Mischkammer gelangt die konditionierte Trübe zum Filter 4.

In Fig. 2 ist strichpunktiert noch eine weitere Trübezuleitung 13 bei der Mischkammer angedeutet, um anzudeuten, daß mehr als zwei, beispielsweise vier sich paarweise kreuzende Trübe-Teilstromleitungen vorgesehen werden können.

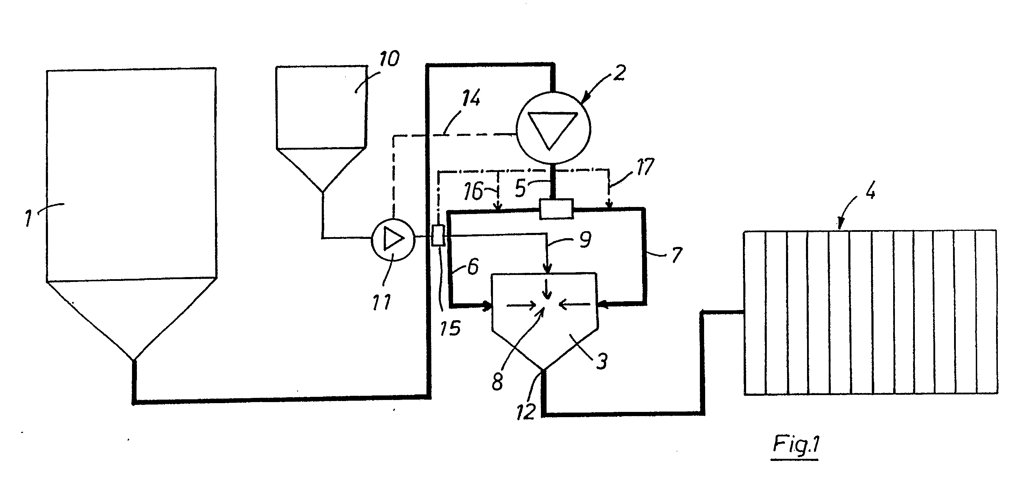

Das Mengenverhältnis zwischen Flockungsmittellösung und Trübe-Durchflußmenge ist auf einem konstanten Wert zu halten, beispielsweise auf ein Verhältnis 1:10. Die Förderleistung der Pumpe 11 für Flockungsmittel wird nach Maßgabe der durch die Pumpe 2 bewirkten Förderung kontinuierlich geregelt, wie durch die gestrichelte Leitung 14 in Fig. 1 schematisch angedeutet ist.

In Fig. 1 ist ferner stromab der Pumpe 11 ein einstellbares Ventil 15 vorgesehen, mit welchem das Flockungsmittel wahlweise - und mit einem einstellbaren Anteil - über die strichpunktiert eingezeichneten Leitungen 16, 17 in die Trübe-Teilstromleitungen 6, 7 stromauf der Mischkammer 3 eingegeben werden kann. Die gesamte Trübeleitung vom Vorratsbehälter 1 zum Filter 4 kann bei dem gezeigten Aufbau der Konditionierungsanlage mit solchen Durchtrittsquerschnitten ausgelegt werden, daß der Gefahr einer Verstopfung vorgebeugt ist.

## Ansprüche

1. Verfahren zum Einmischen einer Flockungsmittellösung in eine zu filtrierende, unter Filtrationsdruck stehende Trübe, insbesondere bei Abwässer-Kläranlagen, dadurch gekennzeichnet, daß der Trübestrom in zwei oder mehrere Teilströme aufgeteilt und die Teilströme nachfolgend zur Durchmischung mit dem Flockungsmittel als Prallströme gegeneinander gerichtet werden.

2. Verfahren nach Anspruch 1, dadurch gekennzeichnet, daß die Flockungsmittellösung erst im Bereich der Prallzone (8) in die Trübe-Teilströme eingeleitet wird.

3. Verfahren nach den Ansprüchen 1 oder 2, dadurch gekennzeichnet, daß die Flockungsmittellösung bereits vor der Prallzone (8) in den ungeteilten Trübestrom (5) oder in die Trübe-Teilströme eingeleitet wird.

4. Vorrichtung zur Durchführung des Verfahrens nach Anspruch 1, dadurch gekennzeichnet, daß die Trübeleitung ausgangsseitig der Filtrationspumpe (2) in mehrere Teilleitungen (6, 7) aufgeteilt ist, welche radial oder mit einer radialen Komponente -gegeneinander gerichtet in eine etwa zylindrische Mischkammer (3) münden, in die an der dem Mischkammerausgang (12) gegenüberliegenden Seite axial eine Zuleitung (9) für die Flockungsmittellösung einmündet.

5. Vorrichtung nach Anspruch 4, dadurch gekennzeichnet, daß die Achse der zylindrischen Mischkammer (3) vertikal gerichtet ist und daß die Trübezuleitungen (6, 7) schräg aufwärts gegen die oben angeordnete Flockungsmittelzuleitung (9) innerhalb der Mischkammer (3) gerichtet sind.

6. Vorrichtung nach den Ansprüchen 4 oder 5, dadurch gekennzeichnet, daß von der Flockungsmittelleitung aus Zuleitungen (16, 17) zu den Trübe-Teilleitungen (6, 7) abzweigen und daß die Mengenaufteilung zwischen in die Trübe-Teilleitungen (6, 7) und in die Prallzone (8) zugeleiteter Flockungsmittellösung mittels eines Ventiles (15) einstellbar ist.

*Fig.1*

EP 0 421 265 A1

Fig.2

Europäisches
Patentamt

**EUROPÄISCHER RECHERCHENBERICHT**

Nummer der Anmeldung

**EP 90 11 8526**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 283 717  (DORR-OLIVER INC.)<br>* Seite 11, Zeilen 3 - 21; Figur 3 *<br>– – – | 1 | C 02 F 1/52<br>B 01 F 5/02 |
| A | BE-A-5 541 11  (DORR-OLIVER INC.)<br>* Seite 12; Anspruch 10 * * Seite 7, Zeilen 25 - 30; Figuren 2, 7 *<br>– – – | 1,4,5 | |
| A | GB-A-7 318 15  (STANDARD OIL DEVELOPMENT COMP.)<br>* Seite 1, Zeilen 12 - 68 * * Seite 4, Zeilen 43 - 60; Figur 2 *<br>– – – | 1,4 | |
| A | GB-A-1 060 540  (COMBUSTION ENGINEERING INC.)<br>* Seite 1, Zeilen 30 - 53 * * Seite 1, Zeilen 67 - 84 @ Seite 2, Zeilen 20 - 62; Figuren 1, 2 *<br>– – – | 1,2,4 | |
| D,A | DE-A-2 750 028  (HANS KÜBLER)<br>* Ansprüche 1, 10-13 *<br>– – – – – | 1 | |

| | RECHERCHIERTE SACHGEBIETE (Int. Cl.5) |
|---|---|
| | C 02 F<br>B 01 F |

Der vorliegende Recherchenbericht wurde für alle Patentansprüche erstellt

| Recherchenort | Abschlußdatum der Recherche | Prüfer |
|---|---|---|
| Den Haag | 07 Januar 91 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument